# EUROPEAN PATENT APPLICATION

(11) **EP 4 668 554 A1**
(43) Date of publication of application: **24.12.2025**
(21) Application number: 25180652.7
(22) Date of filing: 04.06.2025
(51) Int. Cl.: H02K 7/00, H02K 9/19, H02K 11/33, H02K 5/20, H02K 5/22

(54) **ROTARY ELECTRIC MACHINE**

(30) Priority: 18.06.2024 JP 2024098106
(71) Applicant: Mazda Motor Corporation, Aki-gun, Hiroshima 730-8670 (JP)
(72) Inventor: Ikeda, Erika, Hiroshima, 730-8670 (JP); Koumoto, Masaaki, Hiroshima, 730-8670 (JP); Uchise, Hideaki, Hiroshima, 730-8670 (JP); Kawasaki, Shota, Hiroshima, 730-8670 (JP); Tsukishita, Yuki, Hiroshima, 730-8670 (JP)
(74) Representative: Müller-Boré & Partner Patentanwälte PartG mbB

(57) **Abstract**

One refrigerant flow path 110, through which a refrigerant flows, and two electric power wires 70, 80, through each of which a current to energize a rotary electric machine 2 flows, are provided. The two electric power wires 70, 80 are arranged inside an integrated structure portion 50 in a manner to be in proximity to the refrigerant flow path 110 from different directions.

## Description

### [Technical Field]

The invention relates to a rotary electric machine (an electric motor, a generator, or a generator motor) that is mounted for driving on a vehicle in particular.

### [Background Art]

During operation of a rotary electric machine, the rotary electric machine generates heat due to copper loss and iron loss. In a case of the rotary electric machine that is an in-vehicle drive source, a large current flows therethrough. Thus, a heat generation amount is also large. It is common practice to cool the rotary electric machine by circulation of a refrigerant and thereby suppress a temperature increase thereof. The same applies to an energized portion such as a terminal block that is associated with the rotary electric machine.

In Patent Literature 1 and Patent Literature 2, prior art related to the disclosed technique is disclosed, for example. In Patent Literature 1, a motor in which a terminal block is attached to an upper portion of a refrigerant flow path is disclosed. In Patent Literature 2, a motor in which a terminal block is attached to a side portion of a refrigerant flow path is disclosed.

### [Citation List]

### [Patent Literature]

[Patent Literature 1] JP2006-296103A
[Patent Literature 2] US2022/0037963A1

### [Summary]

### [Technical Problem]

In the case of the motors of Patent Literature 1 and Patent Literature 2, heat generation portions (a bus bar, an electric wire, and the like as metal conductors) of the terminal block can only be cooled in a predetermined downward or lateral direction. In addition, the terminal block and the refrigerant flow path that are configured separately are arranged to be adjacent to each other. Thus, an overall size of these is increased. There is room for improvement in terms of downsizing.

In view of the above, this specification discloses a technique that solves drawbacks of these techniques related to a terminal block and a refrigerant flow path of a rotary electric machine, that is excellent in a cooling performance, and that can be made compact in size.

### [Solution to Problem]

The invention relates to a rotary electric machine, as defined in claim 1.

Particularly, the rotary electric machine includes: a first flow path that constitutes a refrigerant flow path (or a coolant flow path) through which a refrigerant (or a coolant) flows; a first wire and a second wire, each of which constitutes an electric power wire through which a current to energize the rotary electric machine flows; and an integrated structure portion in which the first flow path, the first wire, and the second wire are integrated. The first wire and the second wire are arranged inside the integrated structure portion in a manner to be in proximity to the first flow path from different directions.

That is, according to this rotary electric machine, the two electric power wires, through which a large current flows, are integrated with the integrated structure portion together with the one refrigerant flow path, through which the refrigerant flows. Therefore, these positional relationships are unchanged even when some impact is applied. Even in proximity, the arrangement of these can stably be maintained. Interference with each other can be prevented.

Then, the two electric power wires are in proximity to a single cooling flow path from different directions. Thus, it is possible to effectively cool the two electric power wires with a single cooling flow path. It is possible to suppress the increase in electrical resistance that is associated with the temperature increase. The transverse cross-sectional area of the electric power wire can be reduced, and the weight can be reduced. The size of the integrated structure portion can be made compact together with the electric power wire.

The integrated structure portion may have an opening into/out of which the refrigerant flows.

In this way, the size of the integrated structure portion can be made compact.

The integrated structure portion may have a terminal block that is formed by the first wire and the second wire.

In this way, the size of the integrated structure portion can be made compact. When the terminal block, and the inlet and the outlet of the refrigerant are also provided, the size of the integrated structure portion can be made further compact.

The integrated structure portion may have a molded structure that is made of an insulating resin.

In this way, the integrated structure portion is excellent in versatility since it can be formed into an appropriate shape. It is also advantageous in terms of an insulating property.

The molded structure may include an insulating filler that has higher thermal conductivity than the insulating resin. Particularly, a thermal conductivity of the insulating filler is higher than a thermal condctivity of the insulating resin.

In this way, a cooling performance of the molded structure is improved. Thus, the size of the integrated structure portion can further be made compact.

The first wire and the second wire may each be formed of a plate-shaped metal conductor, and a plate surface of each of the first wire and the second wire may be arranged to oppose the first flow path.

This facilitates heat exchange between the electric power wire and the refrigerant. Therefore, the transverse cross-sectional area of the electric power wire can further be reduced, and the weight can further be reduced. The size of the integrated structure portion can be made further compact.

The first wire may be formed of a plate-shaped metal conductor, and the first wire may have a bent portion in which a plate surface is bent along the first flow path.

This facilitates heat exchange between the electric power wire and the refrigerant. Therefore, the transverse cross-sectional area of the electric power wire can further be reduced, and the weight can further be reduced. The size of the integrated structure portion can be made further compact.

The first wire may have a straight portion that extends along the first flow path.

This facilitates heat exchange between the electric power wire and the refrigerant. Therefore, the transverse cross-sectional area of the electric power wire can further be reduced, and the weight can further be reduced. The size of the integrated structure portion can be made further compact.

The electric power wire may include a third wire that is integrated with the integrated structure portion together with the first wire and the second wire, the refrigerant flow path may include a second flow path that is integrated with the integrated structure portion together with the first flow path, and the third wire, the first flow path, the first wire, the second flow path, and the second wire may be arranged to be aligned in proximity in the order of these.

In this way, the electric power wire through which a three-phase AC current flows can effectively be cooled in a compact size.

### [Advantageous Effect]

By applying the invention to the rotary electric machine, the excellent cooling performance of the electric power wire can be achieved, and the size thereof can be made compact.

### [Brief Description of Drawings]

[FIG. 1] FIG. 1 is a view illustrating an application example of a rotary electric machine.
[FIG. 2] FIG. 2 is a view in which a drive unit is viewed from above.
[FIG. 3] FIG. 3 is a view as viewed in a direction indicated by an arrow A1 in FIG. 2.
[FIG. 4] FIG. 4 is an external view of a body portion of a motor that is indicated by broken lines in FIG. 3 and is a view illustrating a structure thereof.
[FIG. 5] FIG. 5 is a schematic cross-sectional view that is indicated by an arrow A2 in FIG. 3, and is a view illustrating cooling of the motor.
[FIG. 6] FIG. 6 is a view illustrating a part of a cooling structure of the motor.
[FIG. 7] FIG. 7 is a schematic cross-sectional view that is indicated by the arrow A2 in FIG. 3, and is a view illustrating energization of the motor.
[FIG. 8] FIG. 8 is a view illustrating a part of an energization structure of the motor.
[FIG. 9A] FIG. 9A is a schematic perspective view of a hybrid terminal block.
[FIG. 9B] FIG. 9B is a schematic perspective view of the hybrid terminal block.
[FIG. 9C] FIG. 9C is a schematic perspective view of the hybrid terminal block.
[FIG. 9D] FIG. 9D is a schematic perspective view of the hybrid terminal block.
[FIG. 10] FIG. 10 is a schematic cross-sectional view that is indicated by an arrow A3 in FIG. 9A.
[FIG. 11] FIG. 11 is a schematic cross-sectional view that is indicated by an arrow A4 in FIG. 10.
[FIG. 12] FIG. 12 is a view illustrating an electric power wire.
[FIG. 13] FIG. 13 is a schematic view illustrating a positional relationship between a refrigerant flow path and the electric power wire.
[FIG. 14] FIG. 14 is a view illustrating a reinforcing member.
[FIG. 15A] FIG. 15A is a view illustrating a second embodiment.
[FIG. 15B] FIG. 15B is a schematic cross-sectional view that is indicated by an arrow A6 in FIG. 15A.

### [Description of Embodiments]

Hereinafter, the invention will be described. However, the following description is merely illustrative in nature. Front-rear, left-right, and up-down directions, which will be used in the description, will be based on a vehicle. In each of the drawings, these directions are indicated by arrows. The left-right direction corresponds to a vehicle width direction.

A direction in which a rotation axis extends will be referred to as an axial direction. In addition, a direction around the rotation axis will be referred to as a circumferential direction, and a direction of a radius thereof will be referred to as a radial direction.

### <Overall Structure of Rotary Electric Machine>

The rotary electric machine in the invention may be an electric motor, a generator, or a generator motor from a functional viewpoint. The rotary electric machine, to which the invention is applied, is suitable as a drive source of the vehicle.

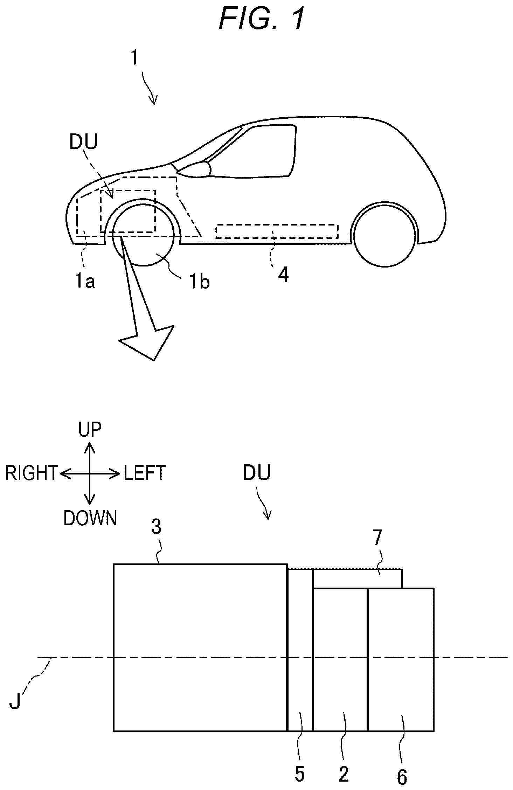

An example thereof is illustrated in FIG. 1. The exemplified rotary electric machine functions as a generator during regeneration, but a main function thereof is an electric motor (motor). Thus, the rotary electric machine will be described as the motor herein.

An exemplified vehicle 1 may be a so-called hybrid vehicle. A motor 2 and an engine 3 are mounted on the vehicle 1. The vehicle 1 travels by driving of the engine 3 and/or the motor 2. For example, as an electric power source of the motor 2, a high-voltage, large-capacity battery 4 is mounted under a floor panel of the vehicle 1.

The motor 2 may be integrally assembled with the engine 3. That is, the motor 2 constitutes a drive unit DU that is integrated with the engine 3. The drive unit DU may be mounted in a front compartment 1a of the vehicle 1. The drive unit DU rotationally drives left and right front wheels 1b, 1b. This vehicle 1 may be a so-called FF vehicle.

The drive unit DU is mounted transversely on the vehicle 1 such that a rotation axis J thereof extends in the vehicle width direction. The engine 3 is an in-line, four-cylinder reciprocating engine, for example. In the invention, a type and performance of the engine 3 can be selected appropriately.

For example, as illustrated in an enlarged manner in FIG. 1, the drive unit DU includes a joint 5 and a transmission 6 together with the engine 3 and the motor 2. The motor 2 is electrically connected to the battery 4 via an inverter 7. Under control of the inverter 7, the motor 2 is driven by electric power that is input from the battery 4. The "rotary electric machine" in the invention is used in a broad sense, and the motor 2 herein may include the inverter 7 (an example of an electrical power unit).

For example, when the vehicle 1 travels by driving of the motor 2, the inverter 7 converts DC power of the battery 4 into three-phase AC power having different phases, and inputs the AC power to the motor 2. Consequently, the motor 2 rotates. During regeneration that is associated with deceleration of the vehicle 1, the inverter 7 converts the AC power that is generated in the motor 2 into the DC power, and outputs the DC power to the battery 4. Here, the inverter 7 may include another electrical power unit, such as a converter, that is related to electric power conversion.

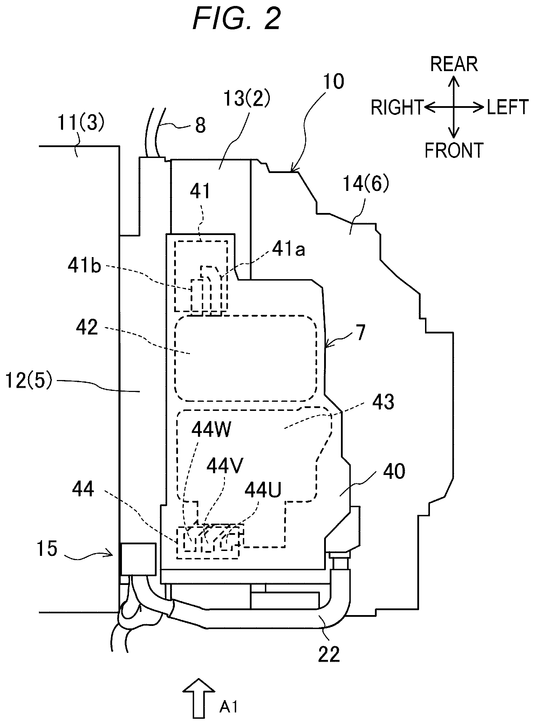

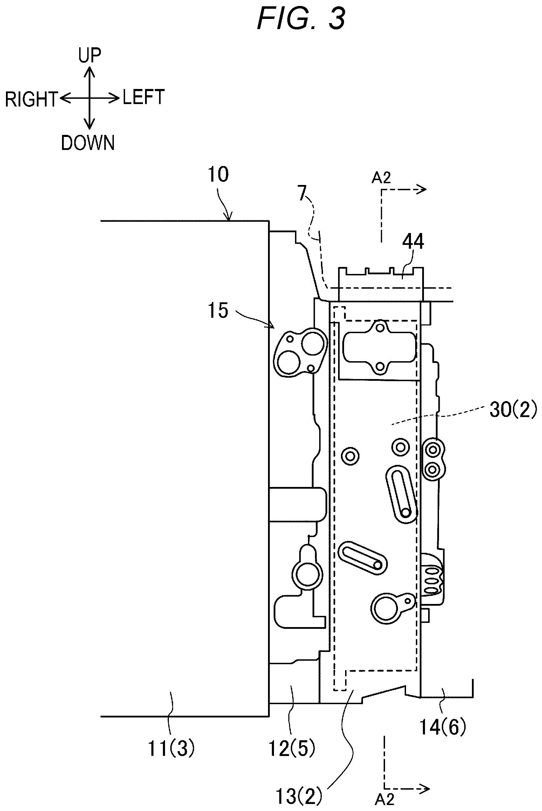

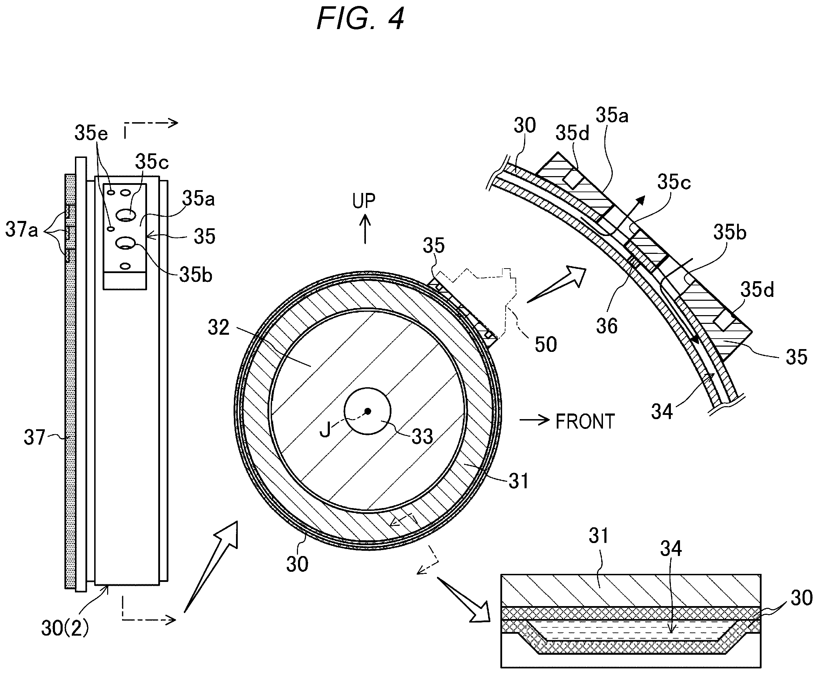

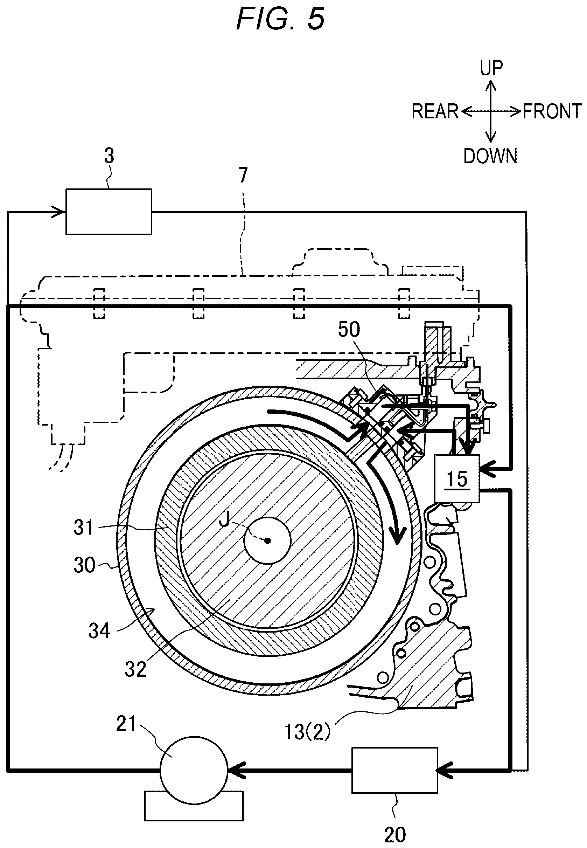

FIG. 2 illustrates a view in which the drive unit DU is viewed from above. FIG. 3 is a view in which the drive unit DU is viewed in an arrow A1 direction in FIG. 2. Pipes and the like are not illustrated. FIG. 4 is an external view of the motor 2 (a body portion) that is indicated by broken lines in FIG. 3 and is a view illustrating a structure thereof. FIG. 5 is a schematic cross-sectional view that is indicated by an arrow A2 in FIG. 3, and is a view illustrating cooling of the motor 2.

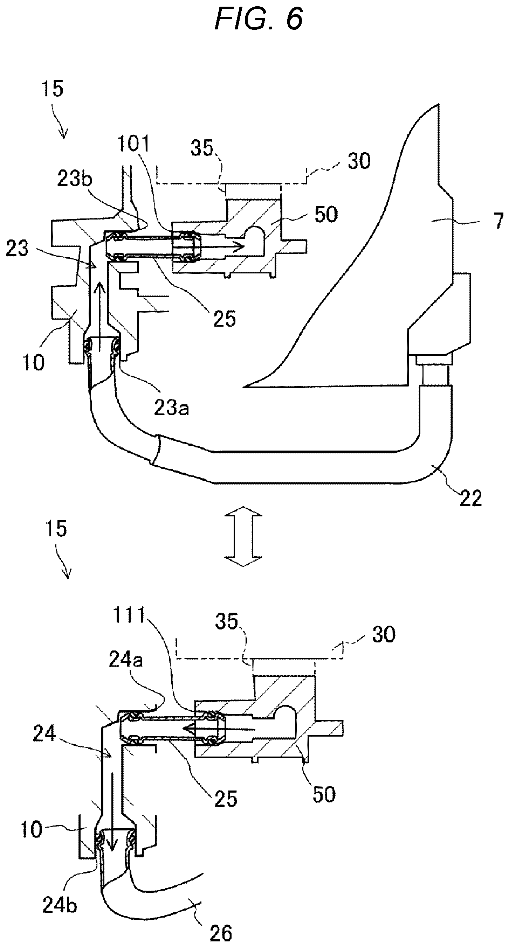

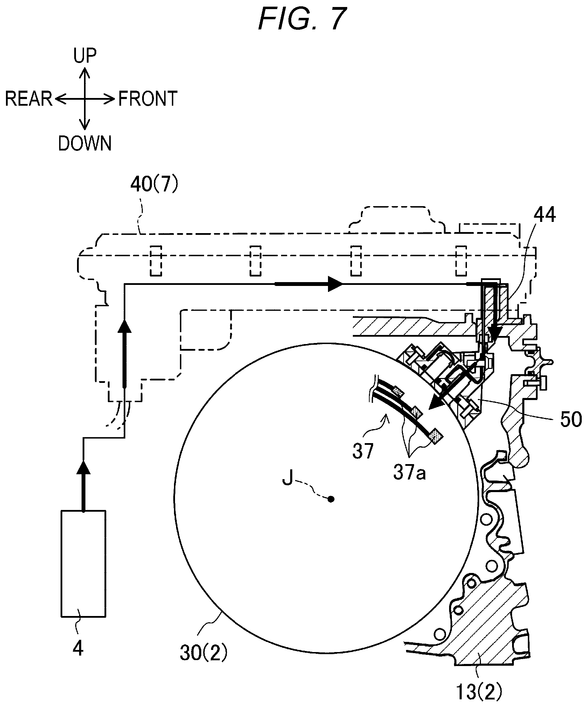

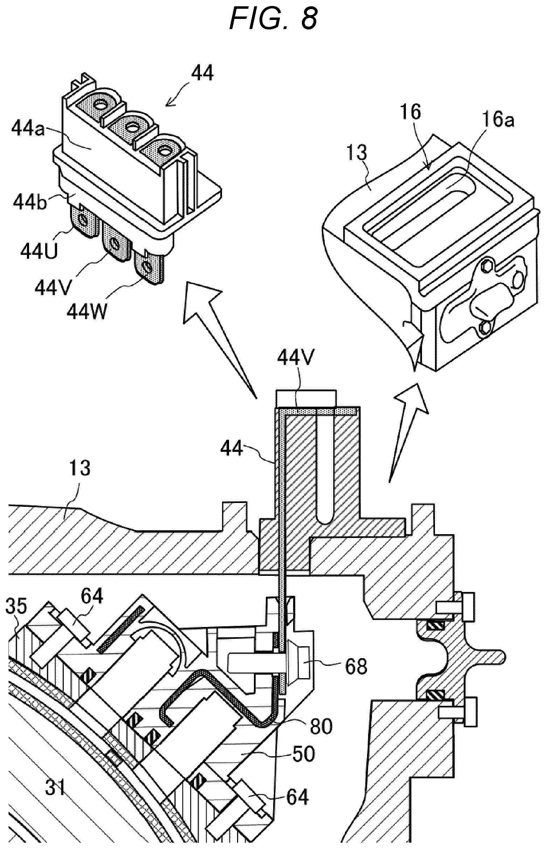

FIG. 6 is a view illustrating a part of a cooling structure of the motor 2. FIG. 7 is a schematic cross-sectional view that is indicated by the arrow A2 in FIG. 3, and is a view illustrating energization of the motor 2. FIG. 8 is a view illustrating a part of an energization structure of the motor 2.

The drive unit DU may be configured by integrally assembling the engine 3, the motor 2, the joint 5, and the transmission 6. That is, the engine 3 has an engine block 11 that constitutes a casing thereof. Similarly, the joint 5 has a joint block 12, the motor 2 has a motor block 13, and the transmission 6 has a transmission block 14.

As illustrated in FIGs. 2 and 3, the drive unit DU may be integrated by assembling these blocks with each other. As a result, the drive unit DU has a unit block 10 in which these blocks are integrated. The "rotary electric machine" in the invention is used in the broad sense, thus is not limited to the single motor 2, and may be the drive unit DU that includes the motor 2.

As indicated by the broken lines in FIG. 3, the body portion of the motor 2 may be accommodated in the motor block 13. External appearance thereof is illustrated on a left side of FIG. 4. As illustrated in FIG. 4, the body portion of the motor 2 includes a housing 30, a stator 31, a rotor 32, a motor shaft 33, and the like.

For example, the motor 2 is a three-phase permanent magnet synchronous motor (or a three-phase synchronous motor), for example. The rotor 32 is formed of a cylindrical member that includes a permanent magnet. Although not illustrated, magnetic poles including an N pole and an S pole may be alternately provided in an outer circumferential portion of the rotor 32. The rotor 32 and the motor shaft 33 are coaxially fixed with the rotation axis J being a center.

The stator 31 may be formed of a cylindrical member. The stator 31 is coaxially arranged with the rotor 32 with an air gap being provided therebetween around the rotor 32. Although not illustrated, the stator 31 may include a three-phase coil group of U, V, and W, each of which includes a steel core and is configured by winding a copper wire around the core.

The housing 30 may be formed of a metal container that has a circular cross section. The rotor 32 and the stator 31 are accommodated in the housing 30. The motor shaft 33 is rotatably supported by the housing 30. The motor shaft 33 is arranged to extend horizontally in the vehicle width direction in a manner to coincide with the rotation axis J. In a state of being able to contact/separate, a right end portion of the motor shaft 33 is coupled to a crankshaft of the engine 3 via the joint 5.

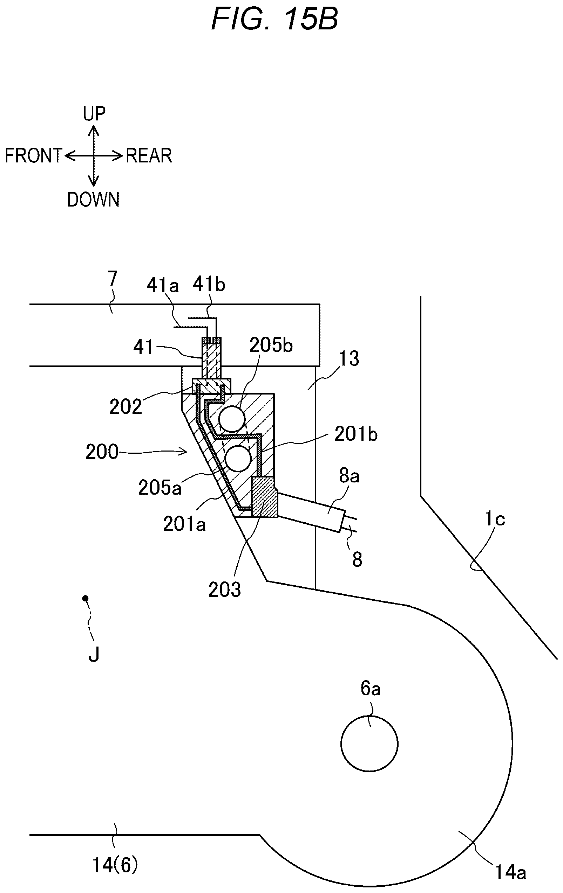

For example, a left end portion of the motor shaft 33 is coupled to the transmission 6. The transmission 6 changes a speed of power that is output from the engine 3 and/or the motor 2, and outputs the changed power. The transmission 6 has an output shaft 6a that is arranged eccentrically to the rotation axis J (see FIG. 15B). The changed power is output to the left and right front wheels 1b, 1b via the output shaft 6a.

An outer circumferential surface of the stator 31 may be in close contact with an inner circumferential surface of the housing 30. During operation of the motor 2, a large current may flow through the stator 31. At the time, the stator 31 generates heat due to copper loss and iron loss. In order to cool the stator 31, a belt-shaped flow path (a stator cooling flow path 34), through which a refrigerant (or a coolant) flows, is formed in an outer periphery of the housing 30. The stator cooling flow path 34 may have a large width that is equal to or greater than a half of a width of the stator 31 and is provided to extend over an entire circumference of the housing 30.

When viewed in the axial direction, an attachment base 35 may be arranged obliquely on an upper front side of the housing 30. In other words, as illustrated in FIG. 4, when viewed from a left side in the axial direction, the attachment base 35 may be arranged at the position that is located above the rotation axis J and corresponds to the position between 12 o'clock and 3 o'clock, particularly, between 1 o'clock and 2 o'clock. In other words, it may be arranged above the middle of the stator cooling flow path 34, which extends along the stator 31, in the up-down direction. Due to an annular shape of the stator 31, when the attachment base 35 may be arranged on the housing 30 at a middle height of the stator 31 in the up-down direction, a horizontal dimension of the rotary electric machine tends to be increased.

For example, the attachment base 35 has a flat attachment surface 35a that faces obliquely upward to the front. The attachment base 35 is formed in a rectangular shape that extends in a tangential direction of the housing 30.

The attachment surface 35a is formed with an inlet 35b and an outlet 35c, each of which communicates with the stator cooling flow path 34. The inlet 35b and the outlet 35c may be adjacent to each other in the circumferential direction. The attachment surface 35a may also be formed with two fastening holes 35d and two positioning holes 35e.

A partition wall 36 may be provided in a portion of the stator cooling flow path 34 that opposes the attachment base 35. The partition wall 36 may be arranged between the inlet 35b and the outlet 35c.

The stator cooling flow path 34 may be partitioned by the partition wall 36. As a result, the refrigerant that is introduced into the stator cooling flow path 34 from the inlet 35b flows clockwise through the stator cooling flow path 34, and is then led out from the outlet 35c.

A coil coupling bus bar 37 of each phase that has an annular shape or an arcuate shape may be installed on a right side surface of the stator 31. Each of the coil coupling bus bars 37 is electrically connected to the coil group of the respective phase. For example, as illustrated in FIG. 7, a portion of each of these coil coupling bus bars 37 that opposes the attachment base 35 is provided with a connection piece 37a that protrudes radially outward.

A specific terminal block (an example of an integrated structure portion) integrally formed by molding is attached to the attachment base 35. This terminal block also serves as a refrigerant flow path (or a coolant flow path) that relays circulation of the refrigerant (also referred to as a hybrid terminal block 50). According to the invention, the hybrid terminal block 50 has a compact structure that has an excellent cooling performance. Details of the hybrid terminal block 50 will be described below.

### (Cooling Structure of Motor)

FIG. 5 illustrates a cooling structure of the motor 2 using the stator cooling flow path 34 in a simplified manner. The vehicle 1 is provided with a cooling water circulation system for cooling the engine 3. In a case of this cooling structure of the motor 2, cooling water is used as the refrigerant (or the coolant). However, the refrigerant may be oil or the like, and a type thereof is not limited.

For example, the cooling structure of the motor 2 uses a heat exchanger 20, a water pump 21, and the like that are provided in the circulation system. The heat exchanger 20 may be arranged in a front portion of the vehicle 1 and cool the cooling water with air. The water pump 21 may be operated by the power or the electric power of the drive unit DU. The cooling water that has been cooled by the heat exchanger 20 may be delivered to the engine 3 and/or the inverter 7 by the water pump 21.

Although not illustrated, the inverter 7 may be provided with a cooling passage for cooling accommodated electrical components. The cooling water that has cooled the inverter 7 may be introduced into a flow path coupling portion 15, which is provided in a front portion of the unit block 10, through a refrigerant introduction pipe 22 illustrated in FIG. 2.

FIG. 6 illustrates the flow path coupling portion 15. The flow path coupling portion 15 may include: coupling flow paths 23, 24 on an introduction side and a lead-out side, respectively; joint pipes 25 on the introduction side and the lead-out side; and the like.

The flow path coupling portion 15 in an upper view of FIG. 6 is that on the introduction side, and the flow path coupling portion 15 in a lower view of FIG. 6 is that on the lead-out side. Each of the coupling flow paths 23, 24 may be formed on an upper front side of the unit block 10. The refrigerant introduction pipe 22 is connected to an inlet 23a, which is opened to a front surface of the unit block 10, in the coupling flow path 23 on the introduction side.

For example, an outlet 23b of the coupling flow path 23 on the introduction side is arranged on an inner surface of the unit block 10 in a manner to oppose a refrigerant inflow port 101 of the hybrid terminal block 50, which will be described below. The refrigerant inflow port 101 communicates with the inlet 35b of the stator cooling flow path 34. The joint pipe 25 on the introduction side may be attached between the outlet 23b of the coupling flow path 23 on the introduction side and the refrigerant inflow port 101 in a manner to constitute a flow path therebetween.

Similar to the introduction side, an inlet 24a of the coupling flow path 24 on the lead-out side may be arranged on the inner surface of the unit block 10 in a manner to oppose a refrigerant outflow port 111 of the hybrid terminal block 50, which will be described below. The refrigerant outflow port 111 communicates with the outlet 35c of the stator cooling flow path 34. The joint pipe 25 on the lead-out side may be attached between the inlet 24a of the coupling flow path 24 on the lead-out side and the refrigerant outflow port 111 in a manner to constitute a flow path therebetween.

As illustrated in FIG. 5, the hybrid terminal block 50 is arranged on an upper portion of the housing 30, in detail, obliquely on the upper front side of the housing 30 when viewed in the axial direction as described above.

When the air enters the annular stator cooling flow path 34, the air may be collected in an upper portion of the stator cooling flow path 34. When the air is accumulated in the stator cooling flow path 34, cooling of the motor 2 is hindered. Thus, it is necessary to prevent the accumulation of the air even when the air enters the stator cooling flow path 34.

For this reason, the hybrid terminal block 50 may be arranged on the upper portion of the housing 30. The hybrid terminal block 50 constitutes the inlet and the outlet into and out of which the cooling water flows from the stator cooling flow path 34. Thus, the hybrid terminal block 50 can remove the air from the stator cooling flow path 34.

From a viewpoint of air removal, the hybrid terminal block 50 may be preferably arranged on the uppermost portion of the stator cooling flow path 34. However, this increases a vertical dimension of the drive unit DU. Meanwhile, when it is arranged as described above, an air removal property is higher than a case where the outlet of the stator cooling flow path 34 is arranged below the rotation axis J of the stator cooling path 34. As a result, it is possible to simultaneously achieve a reduction in the vertical dimension of the drive unit DU and the air removal property of the stator cooling flow path 34. Furthermore, from the viewpoint of air removal, the outlet is preferably provided on the upper surface side in the vertical direction of the stator cooling flow path 34.

In addition, as will be described below, AC connection terminals 44U, 44V, 44W of an AC-side connector 44 in the inverter 7 can directly be attached to the hybrid terminal block 50. As a result, an energization distance can be shortened.

As illustrated in the lower view of FIG. 6, a refrigerant lead-out pipe 26 may be connected to an outlet 24b of the coupling flow path 24 on the lead-out side that is opened in a front surface of the motor block 13. The cooling water is led out from the motor 2 through the refrigerant lead-out pipe 26. The cooling water may be returned to the water pump 21 via the heat exchanger 20. In this way, the cooling water circulates and cools the motor 2.

### (Energization Structure of Motor)

FIG. 7 illustrates an energization structure of the motor 2 using the hybrid terminal block 50 in a simplified manner. As described above, the motor 2 is electrically connected to the battery 4 via the inverter 7.

For example, the inverter 7 has an inverter case 40 that accommodates the electrical components. As illustrated in FIG. 2 and FIG. 7, the inverter case 40 may have a substantially flat shape that has a small thickness in the up-down direction and expands in the front-rear direction and the left-right direction. The inverter case 40 is fastened and attached to an upper portion of the drive unit DU in a manner to be provided across the rotation axis J.

For example, as illustrated in FIG. 2, the inverter 7 has the electrical components such as a DC-side connector 41, a smoothing capacitor 42, a control board 43, and the AC-side connector 44. The DC-side connector 41 includes a positive bus bar 41a and a negative bus bar 41b that are connected to the control board 43.

The DC-side connector 41 is accommodated in the inverter case 40. The DC-side connector 41 is electrically connected to the battery 4 via a predetermined cable 8.

Power-based semiconductors such as an IGBT and a MOSFET may be mounted on the control board 43. With these, an inverter circuit is formed on the control board 43. For example, the control board 43 controls the electric power that is input/output to/from the motor 2. The AC-side connector 44 may include three phases (a U-phase, a V-phase, and a W-phase) of AC connection terminals 44U, 44V, 44W (examples of the "connection terminal of the electrical power unit") that are connected to the control board 43.

The inverter 7 is electrically connected to the motor 2 via e.g., the AC-side connector 44 and the hybrid terminal block 50. For this purpose, the AC-side connector 44 may be installed in a front portion of an upper surface of the motor block 13 such that an upper portion thereof is located in the inverter case 40 and a lower portion thereof is located in the motor block 13.

FIG. 8 is an enlarged view of an installation portion 16 of the AC-side connector 44. The predetermined installation portion 16 in which a long hole 16a is opened is provided in a front end portion of the upper surface of the motor block 13.

The AC-side connector 44 may have a base portion 44a in a rectangular block shape and an insertion portion 44b that is integrally provided on a lower side thereof. The insertion portion 44b is fitted into the long hole 16a.

Each of the AC connection terminals 44U, 44V, 44W may be bent and formed in an L shape. For example, ends of the AC connection terminals 44U, 44V, 44W are arranged side by side in a state of being exposed to the base portion 44a. The other ends of the AC connection terminals 44U, 44V, 44W may protrude downward from the insertion portion 44b in a state of being arranged side by side. The insertion portion 44b may be inserted into the long hole 16a, and the base portion 44a is thereby fixed to the installation portion 16. In this way, the AC-side connector 44 is installed in the motor block 13.

Each of the AC connection terminals 44U, 44V, 44W of the AC-side connector 44 may be directly attached to the hybrid terminal block 50 without a wire being interposed therebetween. Particularly, as will be described in detail below, the AC connection terminals 44U, 44V, 44W of the corresponding phases are respectively screwed to fastening seats 66U, 66V, 66W of the hybrid terminal block 50. Stator-side connection terminals 73, 83a, 93 of the hybrid terminal block 50 may be respectively joined to the connection pieces 37a of the coil coupling bus bars 37. In this way, the inverter 7 and the motor 2 are electrically connected at the shortest distance.

### <Hybrid Terminal Block>

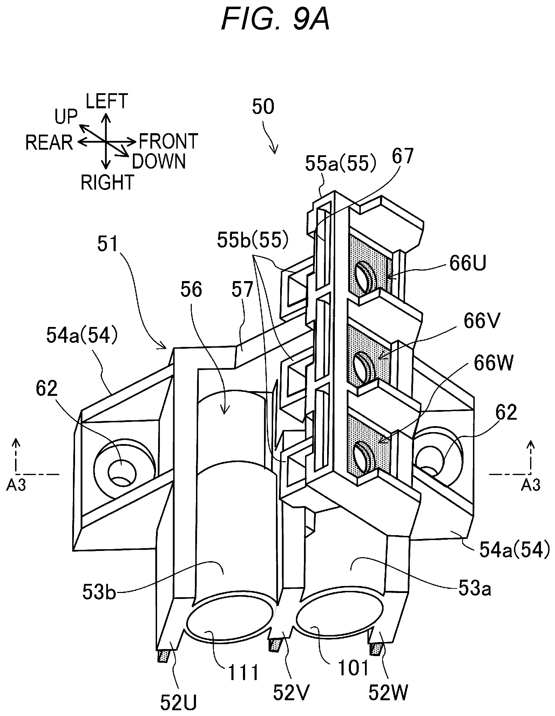

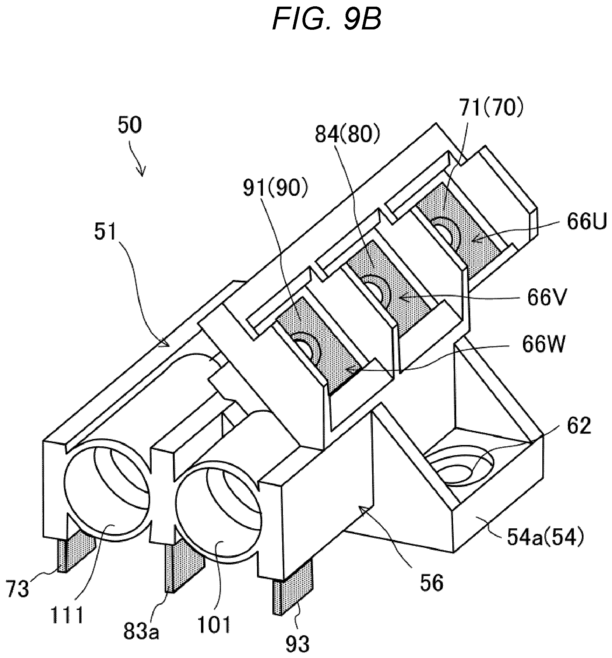

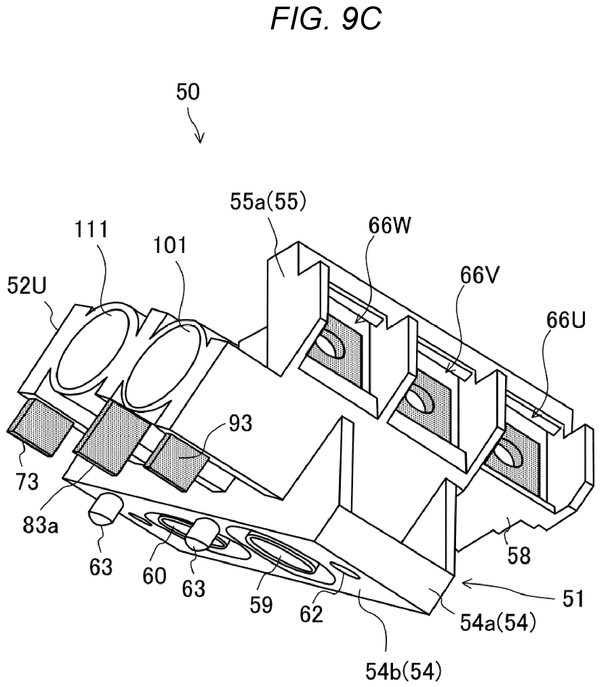

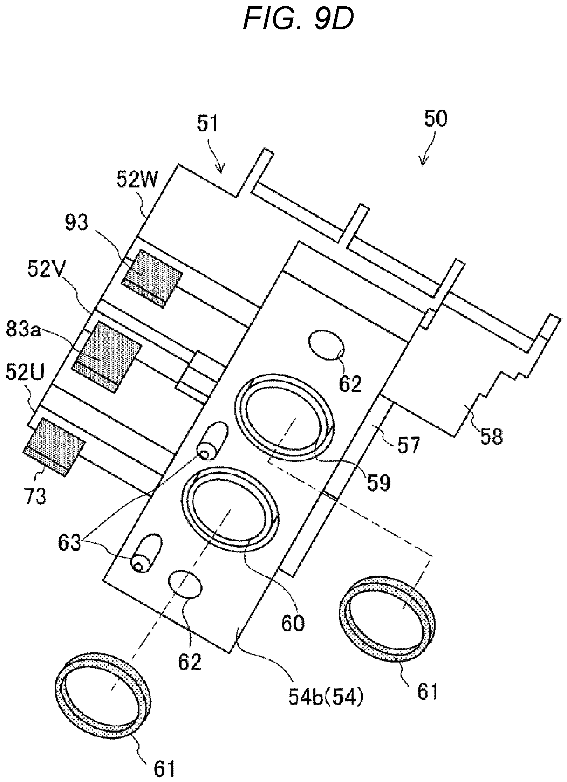

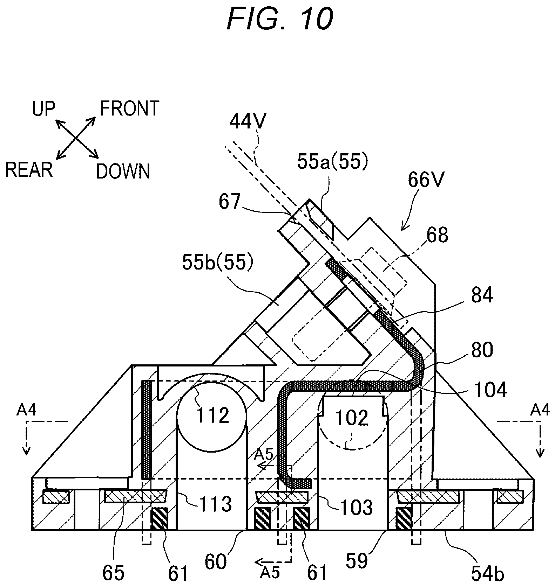

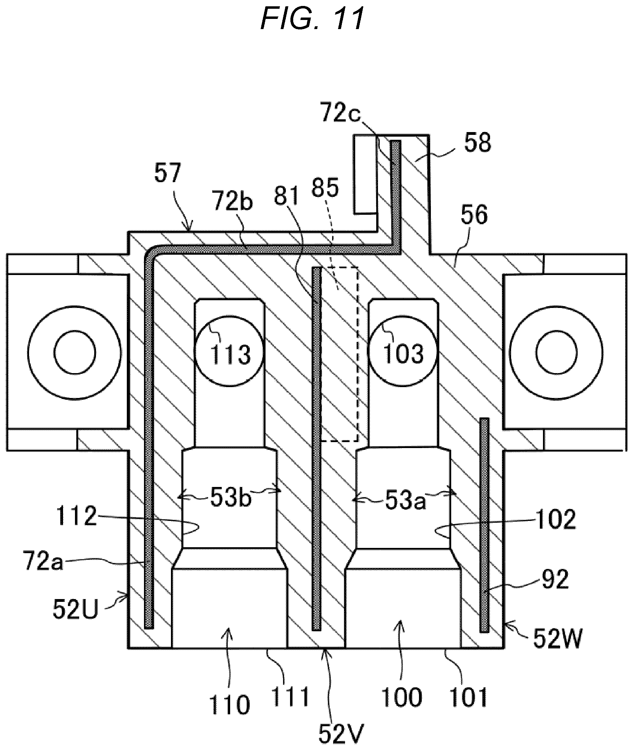

FIG. 9A, FIG. 9B, FIG. 9C, and FIG. 9D illustrate the hybrid terminal block 50 that is viewed in different directions. FIG. 10 is a schematic cross-sectional view that is indicated by an arrow A3 in FIG. 9A. FIG. 11 is a schematic cross-sectional view that is indicated by an arrow A4 in FIG. 10.

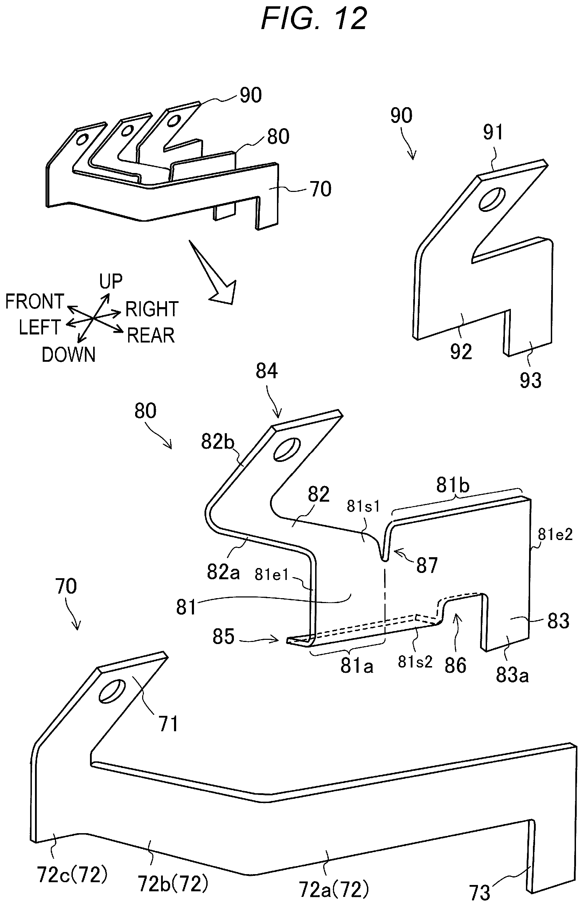

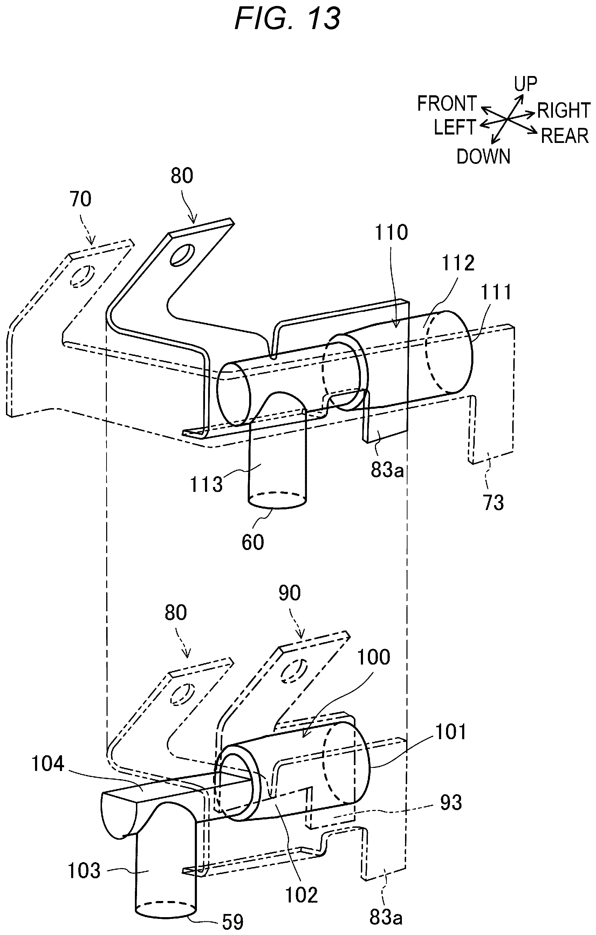

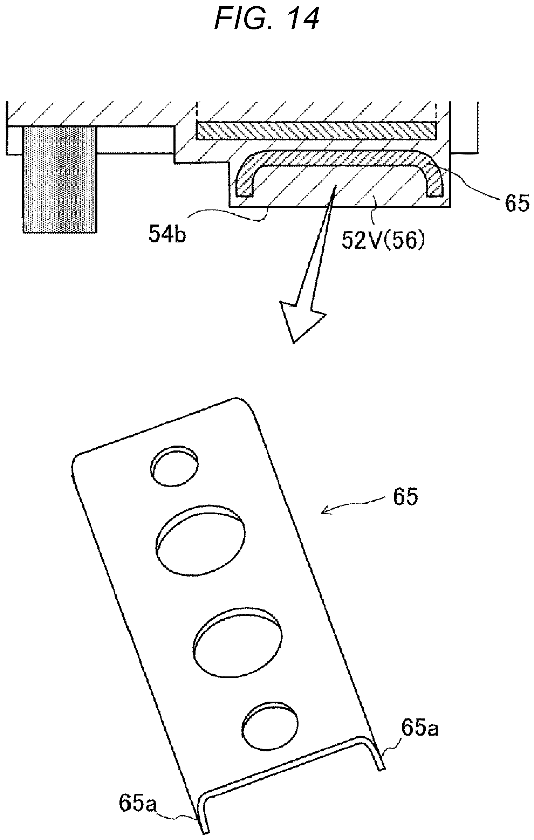

FIG. 12 is a view illustrating an electric power wire. FIG. 13 is a schematic view illustrating the positional relationship between the refrigerant flow path and the electric power wire. FIG. 14 is a view illustrating a reinforcing member 65. A cross-sectional view of FIG. 14 is a schematic cross-sectional view that is indicated by an arrow A5 in FIG. 10.

As described above, the hybrid terminal block 50 also serves as the refrigerant flow path that relays the circulation of the refrigerant, and is integrally formed by molding (the integrated structure portion). That is, the hybrid terminal block 50 constitutes a terminal block that is interposed between the motor 2 (in detail, the stator 31) and the inverter 7 and includes the electric power wire that relays these electrical connections.

The electric power wire may be embedded in a resin by molding. Thus, it is strong against vibration. In addition, even when the distance between the electric power wires is shorter than an insulation distance of a case without the resin, the stable insulating property can be ensured by securing the insulation distance.

The hybrid terminal block 50 is formed with a refrigerant inflow port 101 that the cooling water flows in and a refrigerant outflow port 111 from which the cooling water flows out. That is, the hybrid terminal block 50 is integrally provided with the refrigerant flow path that relays the circulation of the cooling water to the stator cooling flow path 34.

Then, by devising three-dimensional shapes and arrangement of these electric power wires and refrigerant flow path, the compact hybrid terminal block 50 that has an excellent cooling performance is formed.

A reason therefor is that a terminal block of this type is provided with an electric power wire (a bus bar, a lead wire, or the like) that generates heat by energization. In addition, during the travel of the vehicle 1 using the electric power, the large current continuously flows through the electric power wire. Furthermore, as electrical resistance of the electric power wire is increased, a heat generation amount is increased, and the electric power wire becomes high in temperature. As the temperature of the electric power wire is increased, electrical resistance thereof is increased.

Accordingly, the electric power wire is required to have a large transverse cross section with small electrical resistance so as not to generate heat exceeding cooling capacity even at an assumed high temperature. Thus, the electric power wire of the terminal block of this type is generally heavy in weight and large in size.

Meanwhile, this hybrid terminal block 50 also uses the refrigerant flow path, through which the refrigerant flows, and is configured to be able to cool the electric power wire power by the refrigerant at all times during the energization. In addition, the three-dimensional shapes and arrangement of the refrigerant flow path and the electric power wire are devised to enable further effective cooling of the electric power wire. As a result, the hybrid terminal block 50 has the excellent cooling performance and is compact in size. Hereinafter, the details thereon will be described.

The hybrid terminal block 50 may have a molded structure 51 that is made of an insulating resin. The molded structure 51 is formed by injection molding. The molded structure 51 is formed by solidifying the molten insulating resin into a predetermined shape.

Electrical resistivity of the insulating resin may be 10⁸ Ω · m or higher. From viewpoints of an insulating property and moldability, the insulating resin is preferably polyphenylene sulfide (PPS), polybutylene terephthalate (PBT), or the like. Here, the hybrid terminal block 50 is not limited to the insulating resin and may be made of ceramic or the like.

An insulating filler having higher thermal conductivity than the insulating resin may be contained in the molded structure 51.

Specific examples of the filler include silicon oxide, alumina, aluminum nitride, magnesium oxide, boron nitride, silicon nitride, and silicon carbide. When the molded structure 51 contains such a filler, the cooling performance of the electric power wire is improved. Thus, the hybrid terminal block 50 can be made further compact.

The molded structure 51 may include three conductor embedded portions (a U-phase conductor embedded portion 52U, a V-phase conductor embedded portion 52V, and a W-phase conductor embedded portion 52W), two flow path forming portions (an inflow path forming portion 53a and an outflow path forming portion 53b), an attachment portion 54, a connection portion 55, and the like.

For example, A U-phase wire 70, a V-phase wire 80, and a W-phase wire 90 (examples of the "electric power wire"), which will be described below, are respectively embedded in the U-phase conductor embedded portion 52U, the V-phase conductor embedded portion 52V, and the W-phase conductor embedded portion 52W. The inflow path forming portion 53a and the outflow path forming portion 53b may be respectively formed with an inflow path 100 and an outflow path 110 (examples of the "refrigerant flow path").

As illustrated in FIG. 9A, FIG. 9B, and FIG. 11, the inflow path forming portion 53a and the outflow path forming portion 53b may each be formed in a cylindrical shape, and extend in parallel to each other in the left-right direction (the axial direction) together with the inflow path 100 and the outflow path 110. The U-phase conductor embedded portion 52U, the V-phase conductor embedded portion 52V, and the W-phase conductor embedded portion 52W may each be formed in a plate wall shape, and extend in parallel to each other in a state where the wall surfaces thereof oppose each other in the left-right direction (the axial direction).

Then, the U-phase conductor embedded portion 52U, the V-phase conductor embedded portion 52V, the W-phase conductor embedded portion 52W, the inflow path forming portion 53a, and the outflow path forming portion 53b may be integrally formed in the order of the W-phase conductor embedded portion 52W, the inflow path forming portion 53a, the V-phase conductor embedded portion 52V, the outflow path forming portion 53b, and the U-phase conductor embedded portion 52U in a state of being aligned in proximity in a direction from the front to the rear (this portion will also be referred to as a conductor flow path integrated portion 56).

For example, a front side portion of the inflow path forming portion 53a and one wall surface of the W-phase conductor embedded portion 52W are integrated. A rear side portion of the inflow path forming portion 53a and one wall surface of the V-phase conductor embedded portion 52V are integrated, and the other wall surface of the V-phase conductor embedded portion 52V and a front side portion of the outflow path forming portion 53b are integrated. A rear side portion of the outflow path forming portion 53b and one wall surface of the U-phase conductor embedded portion 52U may be integrated.

Right ends of the W-phase conductor embedded portion 52W, the inflow path forming portion 53a, the V-phase conductor embedded portion 52V, the outflow path forming portion 53b, and the U-phase conductor embedded portion 52U may be formed such that end surfaces thereof are aligned (so-called flush). Meanwhile, a left end of the U-phase conductor embedded portion 52U may be formed to be slightly longer than the W-phase conductor embedded portion 52W, the V-phase conductor embedded portion 52V, the inflow path forming portion 53a, and the outflow path forming portion 53b.

Thus, on left sides of the W-phase conductor embedded portion 52W, the V-phase conductor embedded portion 52V, the inflow path forming portion 53a, and the outflow path forming portion 53b, a conductor embedded extension portion 57 in a plate wall shape that extends in the front-rear direction in proximity to these is provided. A front end portion of the conductor embedded extension portion 57 may further be provided with a conductor embedded bulging portion 58 that has a plate wall shape and extends leftward therefrom.

A rear end of the conductor embedded extension portion 57 continues to a left end of the U-phase conductor embedded portion 52U. That is, the left side of the U-phase conductor embedded portion 52U extends forward and leftward by the conductor embedded extension portion 57 and the conductor embedded bulging portion 58.

The attachment portion 54 may have: a pair of flanges 54a, 54a that bulges to both sides of the conductor flow path integrated portion 56; and a rectangular flat joint surface 54b. The joint surface 54b may be provided below the pair of flanges 54a, 54a and the conductor flow path integrated portion 56.

The joint surface 54b may be superimposed on the attachment surface 35a of the attachment base 35. While the conductor flow path integrated portion 56 extends in the left-right direction (the axial direction), the joint surface 54b extends in the front-rear direction (a direction perpendicular to the axis). Thus, these are orthogonal to each other.

As illustrated in FIG. 9C and FIG. 9D, the joint surface 54b may be formed with a coupling outflow port 59 and a coupling inflow port 60 in a manner to correspond to the inlet 35b and the outlet 35c of the attachment surface 35a, respectively. A packing 61 (an O-ring) for preventing liquid leakage may be attached to each of the coupling outflow port 59 and the coupling inflow port 60. The paired flanges 54a, 54a and the joint surfaces 54b may be formed with two through holes 62 in a manner to correspond to the fastening holes 35d of the attachment surface 35a.

In addition, the joint surface 54b may be formed with two positioning pins 63 in a manner to correspond to the positioning holes 35e of the attachment surface 35a. Each of the positioning pins 63 may be inserted into the respective positioning hole 35e and, as illustrated in FIG. 8, a bolt 64 that is inserted into each of the through holes 62 may be screwed into the respective fastening hole 35d. In this way, the attachment portion 54 is attached to the attachment base 35. As a result, the inlet 35b and the outlet 35c of the attachment surface 35a can be coupled to the coupling outflow port 59 and the coupling inflow port 60 of the joint surface 54b with a high degree of accuracy. Liquid leakage can also be effectively prevented.

In order to bring the joint surface 54b into close contact with the attachment surface 35a, it is necessary to make the joint surface 54b flat with a high degree of accuracy. Thus, high molding accuracy is required. Furthermore, sufficient strength is also required to prevent deformation by fastening.

In order to improve the molding accuracy and the strength of the joint surface 54b, the reinforcing member 65 is embedded in the molded structure 51. FIG. 14 exemplifies the reinforcing member 65. The reinforcing member 65 may be formed of a metal pressed product that has rectangular appearance.

The reinforcing member 65 may have paired leg portions 65a, 65a that are formed by bending edges on both sides thereof in the same direction. The reinforcing member 65 may have an arcuate transverse cross section.

A plate surface of the reinforcing member 65 may be formed with four holes that overlap the coupling outflow port 59, the coupling inflow port 60, and the two through holes 62. The reinforcing member 65 may be embedded in the paired flanges 54a, 54a and the conductor flow path integrated portion 56 in a state where the leg portions 65a face the joint surface 54b. Protruding ends of the leg portions 65a each oppose the joint surface 54b with a slight clearance therebetween.

By providing such a reinforcing member 65, the strength of the joint surface 54b can be improved. In addition, during molding, the melted resin can be spread to a portion where the joint surface 54b is formed. The joint surface 54b can be formed with the high degree of accuracy. Thus, a sealing property between the attachment surface 35a and the joint surface 54b can be improved. An amount of the resin for the molded structure 51 can be reduced.

The connection portion 55 may be integrally provided on the upper side of the inflow path forming portion 53a, the W-phase conductor embedded portion 52W, and the conductor embedded bulging portion 58. The connection portion 55 may have an insertion portion 55a in a rectangular block shape and a box-shaped receiving portion 55b. Similar to the conductor flow path integrated portion 56, the insertion portion 55a extends in the left-right direction.

As illustrated in FIG. 9A, one side portion (a base end portion) of the insertion portion 55a may continue to an upper edge portion of the W-phase conductor embedded portion 52W. The insertion portion 55a may be inclined upward to the rear therefrom.

The fastening seats 66U, 66V, 66W of the respective phases may be arranged to be aligned in the left-right direction on an inclined outer surface of the insertion portion 55a. Three insertion ports 67 that respectively correspond to the fastening seats 66U, 66V, 66W may be formed in a protruding end portion of the insertion portion 55a. The AC connection terminals 44U, 44V, 44W described above may be respectively inserted into these insertion ports 67.

As illustrated in FIG. 9B, inverter-side connection terminals 71, 84, 91 of the U-phase wire 70, the V-phase wire 80, and the W-phase wire 90 may be arranged on the fastening seats 66U, 66V, 66W of the respective phases in an exposed state. As illustrated in FIG. 8 and FIG. 10, in a state where the AC connection terminals 44U, 44V, 44W respectively overlap the inverter-side connection terminals 71, 84, 91, these may be fastened by inserting screws 68 (examples of the "predetermined fastening member") into these fastening seats 66U, 66V, 66W. In this way, the inverter-side connection terminals 71, 84, 91 of the respective phases and the AC connection terminals 44U, 44V, 44W are screwed.

For example, the fastening seats 66U, 66V, 66W of the respective phases are each formed with a screw lower hole that penetrates an outer surface of the insertion portion 55a. The three receiving portions 55b may be provided between the insertion portion 55a and the conductor flow path integrated portion 56 in a manner to correspond to the fastening seats 66U, 66V, 66W of the phases. As illustrated in FIG. 10, these receiving portions 55b each receive a screw shaft of a screw 68 to be screwed therein.

### (Inflow Path, Outflow Path)

As illustrated in FIG. 10 and FIG. 11, the inflow path 100 may have a refrigerant inflow port 101 that is opened to a right end surface of the inflow path forming portion 53a. The outflow path 110 may have the refrigerant outflow port 111 that is opened to a right end surface of the outflow path forming portion 53b. Particularly, the inflow path 100 and the outflow path 110 are each formed of a cylindrical flow path.

The inflow path 100 corresponds to the "first flow path" in the invention. The outflow path 110 corresponds to the "second flow path" in the invention.

The inflow path 100 may have an inflow lateral hole 102 that extends leftward from the refrigerant inflow port 101, and an inflow vertical hole 103 that extends from a left end portion of the inflow lateral hole 102 toward the attachment surface 35a. The inflow lateral hole 102 may be orthogonal to the inflow vertical hole 103. Similarly, the outflow path 110 may have an outflow lateral hole 112 that extends leftward from the refrigerant inflow port 101, and an outflow vertical hole 113 that extends from a left end portion of the outflow lateral hole 112 toward the joint surface 54b.

For example, diameters of the inflow lateral hole 102 and the outflow lateral hole 112 are larger than those of the inflow vertical hole 103 and the outflow vertical hole 113. Particularly, the inflow lateral hole 102 and the outflow lateral hole 112 are each formed such that the diameter thereof is reduced stepwise toward the left. Diameters of left end portions of the inflow lateral hole 102 and the outflow lateral hole 112 may be substantially the same as the diameters of the inflow vertical hole 103 and the outflow vertical hole 113.

The opening in the joint surface 54b of the inflow vertical hole 103 may be the above-described coupling outflow port 59. The opening in the joint surface 54b of the outflow vertical hole 113 may be the above-described coupling inflow port 60.

An arcuate defective portion 104 that is formed by cutting out a transverse cross section of the inflow lateral hole 102 in an arcuate shape may be provided in an upper left portion of the inflow lateral hole 102. A surface of the arcuate defective portion 104 may be a flat surface that is substantially parallel to the joint surface 54b.

### (Electric Power Wire)

In the molded structure 51 of the hybrid terminal block 50, the electric power wires of the three phases, each of which relays the electrical connection between the motor 2 and the inverter 7, may be embedded. A drive current that is input to the motor 2 or a regenerative current that is output from the motor 2 flows through these electric power wires.

That is, since the large current flows through the electric power wire, the electric power wire may preferably be a rod-shaped or plate-shaped metal conductor rather than an electric wire. With the rod-shaped or plate-shaped metal conductor, electrical resistance can be reduced relatively easily. In particular, the plate-shaped metal conductor is excellent in three-dimensional moldability and is also suitable for molding.

From viewpoints of the cooling performance and compactness, for example, the electric power wires of the phases (the U-phase wire 70, the V-phase wire 80, and the W-phase wire 90) of the hybrid terminal block 50 are each formed in a specific shape by bending a metal plate (a copper plate) that has been processed into a predetermined shape. FIG. 12 illustrates these electric power wires.

The V-phase wire 80 corresponds to the "first wire" in the invention. The U-phase wire 70 corresponds to the "second wire" in the invention. The W-phase wire 90 corresponds to the "third wire" in the invention.

### (W-Phase Wire)

The W-phase wire 90 may be disposed in the connection portion 55 and the front portion (the W-phase conductor embedded portion 52W) of the conductor flow path integrated portion 56 in the molded structure 51. The W-phase wire 90 may have: a strip-shaped short intermediate portion 92; and a first inverter-side connection terminal 91 and a first stator-side connection terminal 93 that extend orthogonally in mutually opposite directions from edges of both end portions at diagonal positions thereof.

The first inverter-side connection terminal 91 may be bent at an obtuse angle at its base end portion. A screw upper hole may be formed in a protruding end portion of the first inverter-side connection terminal 91. The protruding end portion of the first inverter-side connection terminal 91 may be arranged in a state of being exposed to the W-phase fastening seat 66W such that the screw upper hole overlaps the screw lower hole.

The first stator-side connection terminal 93 may be formed of a rectangular plate-shaped portion that continues to the short intermediate portion 92. A protruding end portion of the first stator-side connection terminal 93 may protrude from the W-phase conductor embedded portion 52W. The protruding end portion of the first stator-side connection terminal 93 may be electrically connected to the connection piece 37a of the W-phase coil coupling bus bar 37.

### (U-Phase Wire)

For example, The U-phase wire 70 is arranged in the connection portion 55 and a rear portion and a left portion of the conductor flow path integrated portion 56 in the molded structure 51. The U-phase wire 70 may have: a strip-shaped long intermediate portion 72; and a second inverter-side connection terminal 71 and a second stator-side connection terminal 73 that extend orthogonally in mutually opposite directions from edges of both end portions at diagonal positions thereof.

The long intermediate portion 72 may be embedded over the U-phase conductor embedded portion 52U, the conductor embedded extension portion 57, and the conductor embedded bulging portion 58. The long intermediate portion 72 may be bent according to arrangement of these.

That is, the long intermediate portion 72 may have: a main body portion 72a that extends in the left-right direction; an extending portion 72b that extends forward and orthogonally from a left end of the main body portion 72a; and a bulging portion 72c that extends leftward and orthogonally from a front end of the extending portion 72b.

The second inverter-side connection terminal 71 may continue to an edge of the bulging portion 72c. Similar to the first inverter-side connection terminal 91, the second inverter-side connection terminal 71 may be bent at an obtuse angle at its base end portion.

A screw upper hole may be formed in a protruding end portion of the second inverter-side connection terminal 71. The protruding end portion of the second inverter-side connection terminal 71 may be arranged in a state of being exposed to the U-phase fastening seat 66U such that the screw upper hole overlaps the screw lower hole.

The second stator-side connection terminal 73 may be formed of a rectangular plate-shaped portion that continues to a right end portion of the main body portion 72a. A protruding end portion of the second stator-side connection terminal 73 may protrude from the U-phase conductor embedded portion 52U. The protruding end portion of the second stator-side connection terminal 73 may be electrically connected to the connection piece 37a of the U-phase coil coupling bus bar 37.

### (V-Phase Wire)

For example, the V-phase wire 80 is arranged in a portion of the molded structure 51 between the inflow path 100 and the outflow path 110 in the connection portion 55 and a central portion of the conductor flow path integrated portion 56. Thus, the V-phase wire 80 has a particularly complicated shape.

The V-phase wire 80 may have a first conductive portion 81, a second conductive portion 82, and a third conductive portion 83. The first conductive portion 81 may be arranged to extend in the left-right direction between the inflow path 100 and the outflow path 110 along these.

The first conductive portion 81 may be embedded in the V-phase conductor embedded portion 52V (including parts of the integrated inflow path forming portion 53a and outflow path forming portion 53b) in a state of being arranged substantially parallel to both the inflow path 100 and the outflow path 110. As will be described below, the first conductive portion 81 extends in a current flow direction (an energization direction).

The first conductive portion 81 may have: paired side portions that include a first side portion 81s1 and a second side portion 81s2 that oppose each other in the up-down direction; and paired end portions that include a first end portion 81e1 (a left end portion) and a second end portion 81e2 (a right end portion) located at both left and right ends of these side portions.

The first conductive portion 81 may have: a portion with a small plate width (a small width portion 81a) that is provided on a side of the first end portion 81e1; and a portion with a large plate width (a large width portion 81b) provided on a side of the second end portion 81e2 that continues to this small width portion 81a. The large width portion 81b may be longer than the small width portion 81a (approximately twice). Particularly, the first conductive portion 81 is provided with a bent portion 85 across these small width portion 81a and large width portion 81b.

Further particularly, the bent portion 85 is formed by bending the second side portion 81s2 of the first conductive portion 81 in a substantial L-shape to the front with a predetermined width. As illustrated in FIG. 10 and FIG. 11, a protruding end of the bent portion 85 is arranged to oppose the inflow vertical hole 103 with a slight clearance therebetween.

The bent portion 85 may extend from the first end portion 81e1 of the second side portion 81s2 of the first conductive portion 81 to an intermediate portion of the second side portion 81s2. Due to the bent portion 85, even when the plate width of the small width portion 81a is small, the first conductive portion 81 can have a large transverse cross-sectional area.

That is, as will be described below, even when a limitation is imposed on a radial size of the first conductive portion 81, a large conductive area (a cross-sectional area through which the current flows) can be secured. Thus, electrical resistance can be reduced. Even in a portion that is difficult to radiate heat, it is possible to suppress a temperature increase during the energization. Then, by bending it into the substantial L-shape, the molten resin can smoothly fill during molding.

A concave portion 86 may be provided in a boundary portion of the second side portion 81s2 on the second end portion 81e2 side of the bent portion 85. The concave portion 86 may be formed by recessing the second side portion 81s2 in a substantially rectangular shape. The presence of the concave portion 86 allows the second side portion 81s2 to be easily bent. The concave portion 86 contributes to the formation of the bent portion 85.

The presence of the concave portion 86 reduces the plate width of the first conductive portion 81. Meanwhile, the concave portion 86 is formed in the large width portion 81b. Thus, even with the presence of the concave portion 86, the large conductive area can be secured.

The second conductive portion 82 may be formed of a substantially V-shaped portion, and may be provided on the first side portion 81s1 side of the first end portion 81e1 of the first conductive portion 81. A notch 87 that is cut in a plate width direction is provided in a boundary portion between the small width portion 81a and the large width portion 81b in the first side portion 81s1 of the first conductive portion 81. By bending the plate surface via this notch 87, a coupling portion between the first conductive portion 81 and the second conductive portion 82 is formed.

The presence of the notch 87 allows the first side portion 81s1 to be easily bent. The notch 87 contributes to the formation of the second conductive portion 82 as well as the small width portion 81a and the large width portion 81b having the different plate widths. The notch 87 and the concave portion 86 may be displaced in the energization direction. Then, the bent portion 85 that extends across the small width portion 81a and the large width portion 81b may be formed. Accordingly, even when the first conductive portion 81 is formed with the notch 87 and the concave portion 86 that reduce the plate width thereof, the large conductive area can be secured.

The second conductive portion 82 may have: a horizontal surface portion 82a that is bent at a substantially right angle to the same side as the bent portion 85 from the first side portion 81s1 of the first conductive portion 81 and extends farther than the bent portion 85; and an inclined surface portion 82b that is folded back at an acute angle in an opposite direction from the protruding end of the horizontal surface portion 82a and extends in a direction away from the bent portion 85.

The horizontal surface portion 82a does not always have to be bent at the substantially right angle. However, by bending it at the substantially right angle together with the bent portion 85, it is possible to suppress a separation distance therebetween to have a sufficient width to sandwich the inflow path 100 while the horizontal surface portion 82a and the bent portion 85 are formed into straight shapes that are easily processed.

A screw upper hole may be formed in a protruding end portion of the inclined surface portion 82b. As illustrated in FIG. 10, the protruding end portion of the inclined surface portion 82b may be arranged in a state of being exposed to the fastening seat 66V such that the screw upper hole overlaps the screw lower hole. The protruding end portion of the inclined surface portion 82b constitutes a third inverter-side connection terminal 84.

The third conductive portion 83 may be formed of a rectangular plate-shaped portion, and may be provided on the second side portion 81s2 side of the second end portion 81e2 of the first conductive portion 81. The third conductive portion 83 extends in a direction orthogonal to the second side portion 81s2 of the first conductive portion 81.

The protruding end portion of the third conductive portion 83 may protrude from the V-phase conductor embedded portion 52V. The protruding end portion of the third conductive portion 83 constitutes a third stator-side connection terminal 83a. The protruding end portion of the third conductive portion 83 may be electrically connected to the connection piece 37a of the V-phase coil coupling bus bar 37.

### (Positional Relationship Between Electric Power Wires and Refrigerant Flow Path)

FIG. 13 illustrates the positional relationship between each of the electric power wires (the U-phase wire 70, the V-phase wire 80, and the W-phase wire 90) and the refrigerant flow paths (the inflow path 100 and the outflow path 110). An upper view represents the positional relationship among the outflow path 110, the U-phase wire 70, and the V-phase wire 80. A lower view represents the positional relationship among the inflow path 100, the V-phase wire 80, and the W-phase wire 90.

In the conductor flow path integrated portion 56, the W-phase wire 90 (corresponding to the "third wire"), the inflow path 100 (corresponding to the "first flow path"), the V-phase wire 80 (corresponding to the "first wire"), the outflow path 110 (corresponding to the "second flow path"), and the U-phase wire 70 (corresponding to the "second wire") are arranged to be aligned in proximity to each other in this order from the front side toward the rear side.

In other words, the electric power wires and the refrigerant flow paths are arranged to be alternately aligned in proximity. Thus, all of the U-phase wire 70, the V-phase wire 80, and the W-phase wire 90 can effectively be cooled. The hybrid terminal block 50 can be made compact.

As illustrated in the upper view, the U-phase wire 70 and the V-phase wire 80 are arranged e.g., in proximity to the outflow path 110 in different directions (the front side and the rear side). As illustrated in the lower view, the V-phase wire 80 and the W-phase wire 90 are arranged in proximity to the inflow path 100 from different directions (the front side and the rear side).

As a result, each of the inflow path 100 and the outflow path 110 can cool the two electric power wires with a single refrigerant flow path. Thus, it is possible to efficiently arrange these in a narrow range and to effectively cool each of the electric power wires. Each of the electric power wires can be made short, and the hybrid terminal block 50 can be made compact.

The W-phase wire 90 and the U-phase wire 70 may be located relatively outside the conductor flow path integrated portion 56. Meanwhile, the V-phase wire 80 may be located relatively inside the conductor flow path integrated portion 56. Accordingly, in terms of ease of heat radiation, the V-phase wire 80 is disadvantageous compared to the W-phase wire 90 and the U-phase wire 70.

In contrast, the inflow path 100 and the outflow path 110 may be arranged in proximity to the V-phase wire 80 from different directions (the front side and the rear side). Accordingly, even when the V-phase wire 80 is arranged in the conductor flow path integrated portion 56, the V-phase wire 80 can effectively be cooled. Since it is possible to suppress the temperature increase during the energization, it is possible to shorten the V-phase wire 80. The hybrid terminal block 50 can be made compact.

Furthermore, for example, the V-phase wire 80 is made of the plate-shaped metal conductor, the inflow path 100 opposes the front surface (corresponding to the "first plate surface") of the V-phase wire 80, and the outflow path 110 is arranged to oppose the rear surface (corresponding to the "second plate surface") of the V-phase wire 80. In this way, it is possible to further promote heat exchange between the V-phase wire 80 and each of the inflow path 100 and the outflow path 110. Thus, the V-phase wire 80 can be cooled further effectively.

The V-phase wire 80 may also have the first conductive portion 81 that extends along the inflow path 100 and the outflow path 110. In this way, it is possible to further promote heat exchange between the V-phase wire 80 and the inflow path 100. Thus, the V-phase wire 80 can be cooled further effectively. The first conductive portion 81 corresponds to the "straight portion".

The V-phase wire 80 may further have the bent portion 85 that is bent along an outer periphery of the inflow path 100 in the first conductive portion 81 thereof. In this way, it is possible to further promote heat exchange between the V-phase wire 80 and the inflow path 100. Thus, the V-phase wire 80 can be cooled further effectively.

In order to screw each of the AC connection terminals 44U, 44V, 44W of the AC-side connector 44, the hybrid terminal block 50 may be arranged at the predetermined position described above. As a result, the direction and the position to fasten the screw 68 are limited.

As illustrated in FIG. 10, the first conductive portion 81 may be located at a tip of the screw shaft of the fastened screw 68. Accordingly, in order to appropriately fasten the screw 68 to the hybrid terminal block 50, it is necessary to avoid interference between the screw 68 and the first conductive portion 81. For this reason, the radial size of the first conductive portion 81 is limited.

Meanwhile, due to the provision of the bent portion 85 in the first conductive portion 81, the transverse cross-sectional area thereof can be increased even with the small radial size. Electrical resistance can be reduced.

Moreover, the arcuate defective portion 104 may be provided in the inflow lateral hole 102, and the horizontal surface portion 82a may be arranged to extend along the flat surface thereof. Accordingly, the size of the hybrid terminal block 50 can be made compact in the radial direction. The V-phase wire 80 can be cooled further effectively.

Each of the U-phase wire 70 and the W-phase wire 90 may also be made of the plate-shaped metal conductor. The plate surface of the long intermediate portion 72 of the U-phase wire 70 may be arranged to oppose the outflow path 110. The plate surface of the short intermediate portion 92 of the W-phase wire 90 may be arranged to oppose the inflow path 100.

In this way, the U-phase wire 70 and the W-phase wire 90 can also promote heat exchange with the inflow path 100 or the outflow path 110. Therefore, the U-phase wire 70 and the W-phase wire 90 can be cooled effectively. Each of the long intermediate portion 72 and the short intermediate portion 92 corresponds to the "straight portion".

These long intermediate portion 72 and short intermediate portion 92 of the U-phase wire 70 and the W-phase wire 90, and the first conductive portion 81 of the V-phase wire 80 may extend in the axial direction in the state of being parallel to the inflow path 100 or the outflow path 110. Then, the opening of the inflow path 100 or the outflow path 110, through which the cooling water flows into or out of the hybrid terminal block 50, that is, the refrigerant inflow port 101 and the refrigerant outflow port 111 are arranged on the right end surface of the hybrid terminal block 50.

Particularly, each of the stator-side connection terminals 73, 83a, 93 that extend radially from the hybrid terminal block 50 and is connected to the stator 31 may be arranged on the lower side of the right end portion of the hybrid terminal block 50. That is, these openings 101, 111 and the stator-side connection terminals 73, 83a, 93 may be arranged at the overlapping positions in the axial direction.

Particularly, the size of the motor block 13 in the axial direction is small. By arranging each of the stator-side connection terminals 73, 83a, 93 in the manner to extend radially from the hybrid terminal block 50, the long intermediate portion 72, the short intermediate portion 92, which are embedded in the resin, and the first conductive portion 81 can be made relatively short. This is advantageous to suppress the temperature increase of the electric power wire. Each of the stator-side connection terminals 73, 83a, 93 may be exposed from the hybrid terminal block 50. In this respect, too, it is advantageous to suppress the temperature increase of the electric power wires.

The stator-side connection terminals 73, 83a, 93 are arranged at the positions overlapping the refrigerant inflow port 101 and the refrigerant outflow port 111 in the axial direction. That is, the refrigerant flow path is formed to have the necessary and minimum length. As a result, the hybrid terminal block 50 is also made compact in the axial direction, and the size thereof is optimized.

Furthermore, as illustrated in FIG. 11, in the long intermediate portion 72 of the U-phase wire 70, the extending portion 72b extends from the main body portion 72a, which extends in the axial direction in the state of being parallel to the outflow path 110, while being bent along the end portion of the outflow path 110. Thus, the U-phase wire 70 can be cooled effectively. The extending portion 72b can function as the "bent portion".

Here, the U-phase wire 70 and the V-phase wire 80 may be longer than the W-phase wire 90, which is disadvantageous in terms of the heat generation amount by electrical resistance. However, the temperature increase can be suppressed by increasing the portions in proximity to the refrigerant flow paths 100, 110 in comparison with the W-phase wire 90.

### <Second Embodiment>

In the above-described embodiment, the hybrid terminal block 50 that electrically connects the inverter 7 and the motor 2 is exemplified as the "integrated structure portion" in the invention. In a second embodiment, another form of the "integrated structure portion" will be exemplified.

In the case of the above-described drive unit DU, during the operation, the large current also flows through the DC-side connector 41, which electrically connects the battery 4 and the inverter 7, and peripheral portions thereof. Since the heat generation amount is also large, the sizes of those tend to become large. Thus, the overall size can be made compact by effective cooling.

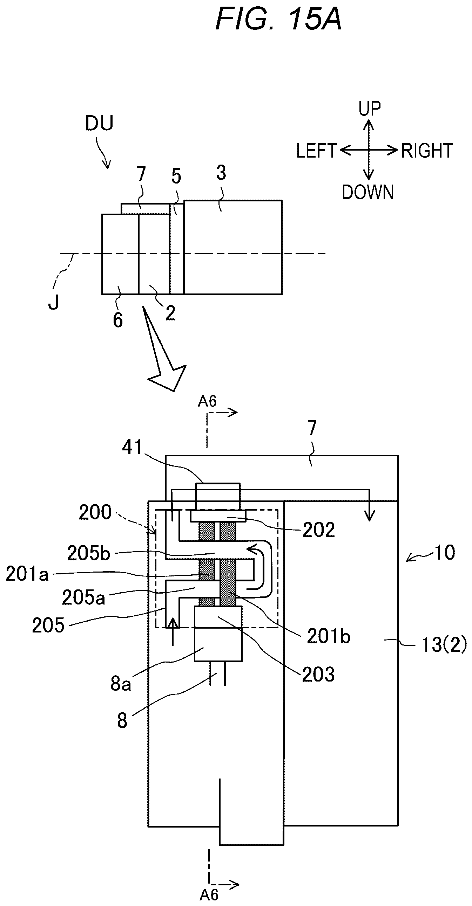

FIG. 15A illustrates a hybrid DC repeater 200 (an example of the integrated structure portion). FIG. 15B is a schematic cross-sectional view that is indicated by an arrow A6 in FIG. 14A. FIG. 15A illustrates a rear side of the drive unit DU.

FIG. 15A further illustrates an enlarged view of the unit block 10 (parts of the motor block 13 and the transmission block 14). The enlarged view is simplified to illustrate the hybrid DC repeater 200 and its cooling structure and energization structure.

As illustrated in FIG. 15B, the output shaft 6a of the transmission 6 may be arranged in a shaft support portion 14a that protrudes rearward from a lower portion of the transmission block 14. This shaft support portion 14a may abut a dash panel 1c first when the drive unit DU is displaced rearward due to a collision from the front of the vehicle 1 (a so-called frontal collision).

In general, the DC connector and the like are arranged at a rear corner of the upper portion of the unit block 10 from a viewpoint of protection against the frontal collision. The arrangement of the inverter 7 above the motor block 13 is also preferred in a point of being located in the proximity to the DC-side connector 41.

Accordingly, the hybrid DC repeater 200 is also arranged at a rear corner of an upper portion of the transmission block 14. The hybrid DC repeater 200 is a molded component that is made of the insulating resin, in which relay terminals 201a, 201b are embedded, and in which a refrigerant flow path is formed. The configurations of the insulating resin and the like is the same as those of the hybrid terminal block 50.

The relay terminals 201a, 201b may include two relay terminals on a positive electrode side and a negative electrode side. These relay terminals 201a, 201b may be strip-shaped metal conductors. When viewed from behind, these relay terminals 201a, 201b are arranged to overlap each other. However, in FIG. 15A, these positions are shifted to the left and right sides for convenience. The front side is the relay terminal 201a on the positive electrode side, and the rear side is the relay terminal 201b on the negative electrode side.

A DC terminal block 202 that is electrically connected to the DC-side connector 41 may be provided in an upper portion of the hybrid DC repeater 200. A DC plug 203 is provided in a lower portion of the hybrid DC repeater 200. The DC connector 8a of the cable 8 that extends from the battery 4 is connected to the DC plug 203. The two relay terminals 201a, 201b are connected between these DC terminal block 202 and DC plug 203.

The two relay terminals 201a, 201b may be arranged to be biased toward the back of the hybrid DC repeater 200, that is, toward the motor block 13. Thus, it is possible to effectively suppress damage to the relay terminals 201a, 201b, and the like during the frontal collision. Meanwhile, the arrangement of the two relay terminals 201a, 201b at the back of the hybrid DC repeater 200 is disadvantageous in terms of heat radiation.

The hybrid DC repeater 200 may be formed with an inflow-side refrigerant flow path 205. In the cooling structure of the motor 2 in the above-described embodiment, the inflow-side refrigerant flow path 205 constitutes a flow path on an upstream side of the cooling water that flows into the inverter 7. The inflow-side refrigerant flow path 205 is configured to be able to efficiently exchange heat with the two relay terminals 201a, 201b.

For example, the inflow-side refrigerant flow path 205 is arranged to intersect with the two relay terminals 201a, 201b three-dimensionally. The inflow-side refrigerant flow path 205 may have: an upstream-side intersecting portion 205a that intersects with the two relay terminals 201a, 201b; and a downstream-side intersecting portion 205b that continues to a downstream side of the upstream-side intersecting portion 205a and extends in a manner to intersect with the two relay terminals 201a, 201b in an opposite direction.

The upstream-side intersecting portion 205a may be arranged to be sandwiched between the two relay terminals 201a, 201b, which are located apart from each other, and the downstream-side intersecting portion 205b may be arranged in proximity to outer sides of the two relay terminals 201a, 201b, which are located in proximity to each other. While relatively low-temperature cooling water flows through the upstream-side intersecting portion 205a, relatively high-temperature cooling water flows through the downstream-side intersecting portion 205b.

The two relay terminals 201a, 201b may be in proximity to the upstream-side intersecting portion 205a from the different directions. Thus, these two relay terminals 201a, 201b can be cooled effectively. Both the upstream-side intersecting portion 205a and the downstream-side intersecting portion 205b are in proximity to the relay terminal 201b on the negative electrode side, which passes through a central portion of the hybrid DC repeater 200, from both sides. Thus, the relay terminal 201b on the negative electrode side can be cooled effectively.

Here, the invention is not limited to the above-described embodiments and includes various other configurations.

For example, the integrated structure portion may be a part of the structure that constitutes the unit block 10. Although the refrigerant flow path of the exemplified integrated structure portion is formed by resin molding, it may be formed by embedding a pipe. Insulating treatment is necessary, but the integrated structure portion is not limited to the resin and may be formed by casting of aluminum or the like.

The electric power wire may be an electric wire. The electric power wire, such as a neutral line, may include a fourth or higher line. The inverter 7 may be arranged laterally (vertically) rather than above the motor 2.

The configurations in the embodiment and the second embodiment may appropriately be combined as necessary. For example, similar to the hybrid terminal block 50, the hybrid DC repeater 200 may be configured that the refrigerant flows from the hybrid DC repeater 200 to the stator cooling flow path 34 by forming a refrigerant flow path that is interposed between the hybrid DC repeater 200 and the stator 31. It may be a rotary electric machine of an electric vehicle.

### [Reference Signs List]

1: vehicle
2: motor
3: engine
4: battery
5: joint
6: transmission
7: inverter
10: unit block
11: engine block
12: joint block
13: motor block
14: transmission block
20: heat exchanger
21: water pump
22: refrigerant introduction pipe
25: joint pipe
30: housing
31: stator
32: rotor
33: motor shaft
34: stator cooling flow path
35: attachment base
36: partition wall
37: coil coupling bus bar
40: inverter case
41: DC-side connector
44: AC-side connector
44U, 44V, 44W: AC connection terminal
50: hybrid terminal block (example of integrated structure portion)
51: molded structure
52U, 52V, 52W: conductor embedded portion
53a, 53b: flow path forming portion
54: attachment portion
55: connection portion
56: conductor flow path integrated portion
65: reinforcing member
66U, 66V, 66W: fastening seat
70: U-phase wire (electric power wire)
71: second inverter-side connection terminal
73: second stator-side connection terminal
80: V-phase wire (electric power wire)
81: first conductive portion
81s1: first side portion
81s2: second side portion
81e1: first end portion
81e2: second end portion
81a: small width portion
81b: large width portion
82: second conductive portion
82a: horizontal surface portion
82b: inclined surface portion
83: third conductive portion
83a: third stator-side connection terminal
84: third inverter-side connection terminal
85: bent portion
86: concave portion
87: notch
90: W-phase wire (electric power wire)
91: first inverter-side connection terminal
93: first stator-side connection terminal
100: inflow path
101: refrigerant inflow port
110: outflow path
200: hybrid DC repeater
201a, 201b: relay terminal
205: inflow-side refrigerant flow path
205a: upstream-side intersecting portion
205b: downstream-side intersecting portion
DU: drive unit
J: rotation axis

## Claims

1. A rotary electric machine (2) comprising:
a first flow path (100) that constitutes a refrigerant flow path (100, 110) through which a refrigerant flows;
a first wire (80) and a second wire (70), each of which constitutes an electric power wire (70, 80, 90) through which a current to energize the rotary electric machine (2) flows; and
an integrated structure portion (50; 200) in which the first flow path (100), the first wire (80), and the second wire (70) are integrated, wherein
the first wire (80) and the second wire (70) are arranged inside the integrated structure portion (50; 200) in a manner to be in proximity to the first flow path (100) from different directions.

2. The rotary electric machine (2) according to claim 1, wherein
the integrated structure portion (50; 200) has an opening (101, 111) into which the refrigerant flows and/or out of which the refrigerant flows.

3. The rotary electric machine (2) according to claim 1 or 2, wherein
the integrated structure portion (50; 200) has a terminal block that is formed by the first wire (80).

4. The rotary electric machine (2) according to claim 1 or 2, wherein
the integrated structure portion (50; 200) further has a terminal block that is formed by the first wire (80) and the second wire (70).

5. The rotary electric machine (2) according to any one of the preceding claims, wherein
the integrated structure portion (50; 200) has a molded structure (51) that is made of an insulating resin.

6. The rotary electric machine (2) according to claim 5, wherein
the molded structure (51) includes an insulating filler that has higher thermal conductivity than the insulating resin.

7. The rotary electric machine (2) according to any one of the preceding claims, wherein
the first wire (80) and the second wire (70) are each formed of a plate-shaped metal conductor, and
a plate surface of each of the first wire (80) and the second wire (70) is arranged to oppose the first flow path (100).

8. The rotary electric machine (2) according to any one of the preceding claims, wherein
the first wire (80) is formed of a plate-shaped metal conductor, and
the first wire (80) has a bent portion (85) in which a plate surface is bent along the first flow path (100).

9. The rotary electric machine (2) according to any one of the preceding claims, wherein
the first wire (80) and the second wire (70) each have a straight portion (81, 92) that extends along the first flow path (100).

10. The rotary electric machine (2) according to any one of the preceding claims, wherein
the electric power wire (70, 80, 90) includes a third wire (90) that is integrated with the integrated structure portion (50; 200) together with the first wire (80) and the second wire (70),
the refrigerant flow path (100, 110) includes a second flow path (110) that is integrated with the integrated structure portion (50; 200) together with the first flow path (100).

11. The rotary electric machine (2) according to claim 10, wherein
the third wire (90), the first flow path (100), the first wire (80), the second flow path (110), and the second wire (70) are arranged to be aligned in proximity in the order of these.

12. The rotary electric machine (2) according to claim 10 or 11, wherein
the rotary electric machine (2) is a three-phase synchronous motor, and
the first wire (80) is a V-phase wire,
the second wire (70) is a U-phase wire, and
the third wire (90) is a W-phase wire.

13. The rotary electric machine (2) according to any one of the preceding claims, further comprising a housing (30), wherein
the integrated structure portion (50; 200) is configured to be arranged on the housing (30).

14. The rotary electric machine (2) according to any one of the preceding claims, wherein
the integrated structure portion (200) is configured to be arranged on a transmission (6) of a vehicle (1).

15. A vehicle (1) comprising the rotary electric machine (2) according to any one of the preceding claims.
